# EUROPEAN PATENT APPLICATION

(11) **EP 4 708 387 A1**
(43) Date of publication of application: **11.03.2026**
(21) Application number: 24815941.0
(22) Date of filing: 03.06.2024
(51) Int. Cl.: H01M 4/36, H01M 4/525, H01M 4/505, C01G 53/00, H01M 4/131, H01M 10/052, H01M 4/02

(54) **POSITIVE ELECTRODE ACTIVE MATERIAL, AND POSITIVE ELECTRODE AND LITHIUM SECONDARY BATTERY COMPRISING SAME**

(30) Priority: 02.06.2023 KR 20230071874
(71) Applicant: LG Chem, Ltd., Seoul 07336 (KR)
(72) Inventor: HEO, Kook Jin, Daejeon 34122 (KR); JEONG, Jin Hoo, Daejeon 34122 (KR); HWANG, Joo Kyoung, Daejeon 34122 (KR); GU, Ye Hyeon, Daejeon 34122 (KR); LEE, Ji Young, Daejeon 34122 (KR); RYU, Hyeon Mo, Daejeon 34122 (KR); KIM, Kyung Gu, Daejeon 34122 (KR)
(74) Representative: Hoffmann Eitle
(86) International application number: PCT/KR2024/007568
(87) International publication number: WO 2024/248567

(57) **Abstract**

The present invention relates to a positive electrode active material including a lithium composite transition metal oxide in a form of a single particle; and a coating portion formed on a surface of the lithium composite transition metal oxide, wherein the coating portion includes a first coating portion; and a second coating portion, wherein the first coating portion is in a form of a discontinuously formed island, and the second coating portion is in a form of a continuously formed coating layer, wherein the first coating portion has a concentration gradient in which an amount of boron (B) decreases and an amount of cobalt (Co) increases from a surface thereof toward a center of a positive electrode active material particle, and the amount of the boron (B) among total metals excluding lithium in the positive electrode active material is in a range of 0.1 mol% to 1.25 mol%, and a positive electrode and a lithium secondary battery which include the same.

## Description

### TECHNICAL FIELD

### Cross-reference to Related Applications

This application claims priority from Korean Patent Application No. 10-2023-0071874, filed on June 2, 2023, the disclosure of which is incorporated by reference herein.

### Technical Field

The present invention relates to a positive electrode active material, and a positive electrode and a lithium secondary battery which include the same.

### BACKGROUND ART

With the recent technological development of electric vehicles, demand for high-capacity secondary batteries is increasing, and, accordingly, research on a positive electrode using a high nickel (high Ni) positive electrode active material with excellent capacity characteristics is being actively conducted.

Since co-precipitation is used to prepare the high nickel positive electrode active material, the prepared high nickel positive electrode active material has a form of a secondary particle in which primary particles are aggregated. However, the active material in the form of a secondary particle causes a side reaction due to microcracks generated in the secondary particle during a long-term charge and discharge process, and also, in a case in which electrode density is increased to improve energy density, the secondary particle is disadvantageous in that structural collapse of the secondary particle occurs to cause a degradation in life characteristics and a decrease in energy density due to a decrease in the active material and an electrolyte solution.

In order to solve such problems of the high nickel positive electrode active material in the form of a secondary particle, a single particle type nickel-based positive electrode active material has recently been developed. The single particle type nickel-based positive electrode active material has an advantage in that particles do not collapse even in the case that the electrode density is increased for high energy density. However, since a relatively high sintering temperature is required to prepare the single particle type nickel-based positive electrode active material, a phase change into an Fm-3m rock-salt structure, such as NiO, occurs as an R-3m layered structure is not properly maintained and lithium escapes from the crystal structure and a ratio of NiO on a surface of the prepared single particle type particle is increased as crystallinity of the positive electrode active material is reduced, and thus, there is a problem in that resistance increases as the NiO increases, and a decrease in energy density and output occurs.

Also, a process of mixing a conductive agent, a binder, an additive, and a solvent with a positive electrode active material to make a slurry must be performed to prepare a positive electrode using the positive electrode active material, but a lithium (Li) byproduct located on a surface in this case alkalizes the solvent, wherein the alkalized solvent is mixed with the binder to gelate the slurry, and it becomes difficult to uniformly apply the slurry for the preparation of the positive electrode when using the gelated slurry.

Thus, there is a need to develop a method which may prevent the performance degradation of the positive electrode active material and the gelation of the slurry by introducing an additional process during the preparation of the positive electrode active material to suppress a reaction of the Li byproduct present on the surface of the positive electrode active material with external substances.

### [Prior Art Documents]

### [Patent Documents]

(Patent Document 1) KR 2019-0094529 A1

### DISCLOSURE OF THE INVENTION

### TECHNICAL PROBLEM

An aspect of the present invention provides a positive electrode active material in which a long-term capacity retention is excellent and a resistance increase rate is suppressed by suppressing gelation of a positive electrode slurry during preparation of the positive electrode slurry and suppressing a reaction of a lithium byproduct on a surface with external substances.

### TECHNICAL SOLUTION

In order to solve the above-described tasks, the present invention provides a positive electrode active material, a method of preparing the same, and a positive electrode and a lithium secondary battery which include the same.
(1) The present invention provides a positive electrode active material including a lithium composite transition metal oxide in a form of a single particle; and a coating portion formed on a surface of the lithium composite transition metal oxide, wherein the coating portion includes a first coating portion; and a second coating portion, wherein the first coating portion is in a form of a discontinuously formed island, and the second coating portion is in a form of a continuously formed coating layer, wherein the first coating portion has a concentration gradient in which an amount of boron (B) decreases and an amount of cobalt (Co) increases from a surface thereof toward a center of a positive electrode active material particle, and the amount of the boron (B) among total metals excluding lithium in the positive electrode active material is in a range of 0.1 mol% to 1.25 mol%.
(2) The present invention provides the positive electrode active material of (1) above, wherein the first coating portion is dispersed and distributed on at least one of the surface of the lithium composite transition metal oxide and a surface of the second coating portion.
(3) The present invention provides the positive electrode active material of (1) or (2) above, wherein the first coating portion includes at least one compound selected from the group consisting of lithium cobalt oxide, lithium boron oxide, and lithium cobalt-boron oxide.
(4) The present invention provides the positive electrode active material of any one of (1) to (3) above, wherein the amount of the boron (B) among the total metals excluding the lithium in the positive electrode active material is in a range of 0.13 mol% to 1.1 mol%.
(5) The present invention provides the positive electrode active material of any one of (1) to (4) above, wherein the first coating portion and the second coating portion each independently include boron (B) and cobalt (Co), and optionally include at least one coating element selected from the group consisting of Co, aluminum (Al), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf).
(6) The present invention provides the positive electrode active material of any one of (1) to (5) above, wherein the lithium composite transition metal oxide has a composition represented by Formula 1.

[Formula 1] LiₐNi_{b}Co_{c}Mn_{d}M¹ₑO₂

In Formula 1,
M¹ is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, and
0.9≤a≤1.1, 0.6≤b<1, 0<c<0.4, 0<d<0.4, and 0≤e<0.1.

(7) The present invention provides the positive electrode active material of any one of (1) to (6) above, wherein the first coating portion includes a compound having a composition represented by Formula 2.

[Formula 2] Li_{f}BgM² ₕM³ᵢOⱼ

In Formula 2,
M² is at least one selected from the group consisting of nickel (Ni), Co, and manganese (Mn),
M³ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0<f≤4, 1≤g≤4, 0≤h≤1, 0≤i≤1, and 1≤j≤8.

(8) The present invention provides the positive electrode active material of any one of (1) to (7) above, wherein the second coating portion includes a compound having a composition represented by Formula 3.

[Formula 3] LiₖCoₗBₘM⁴ₙM⁵ₒO₂

In Formula 3,
M⁴ is at least one selected from the group consisting of Ni and Mn,
M⁵ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0.9≤k≤1.1, 0<1<1, 0<m≤1, 0≤n<0.4, and 0≤o<0.4.

(9) The present invention provides the positive electrode active material of any one of (1) to (8) above, wherein the first coating portion includes a compound having a composition represented by Formula 2, and the second coating portion includes a compound having a composition represented by Formula 3.

[Formula 2] Li_{f}B_{g}M²ₕM³ᵢOⱼ

In Formula 2,
M² is at least one selected from the group consisting of Ni, Co, and Mn,
M³ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0<f≤4, 1≤g≤4, 0≤h≤1, 0≤i≤1, and 1≤j≤8, and

   [Formula 3] LiₖCoₗBₘM⁴ₙM⁵ₒO₂

In Formula 3,
M⁴ is at least one selected from the group consisting of Ni and Mn,
M⁵ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0.9≤k≤1.1, 0<1<1, 0<m≤1, 0≤n<0.4, and 0≤o<0.4.

(10) The present invention provides the positive electrode active material of any one of (1) to (9) above, wherein a total area of the coating portion is in a range of 10% to 100% of a total surface area of the lithium composite transition metal oxide.

(11) The present invention provides a positive electrode including the positive electrode active material of any one of (1) to (10) above.

(12) The present invention provides a lithium secondary battery including the positive electrode of (11) above; a negative electrode; a separator disposed between the positive electrode and the negative electrode; and an electrolyte.

### ADVANTAGEOUS EFFECTS

Since a positive electrode active material of the present invention includes a lithium composite transition metal oxide in a form of a single particle; and a coating portion formed on a surface of the lithium composite transition metal oxide, wherein the coating portion includes a first coating portion; and a second coating portion, wherein the first coating portion is in a form of a discontinuously formed island, and the second coating portion is in a form of a continuously formed coating layer, wherein the first coating portion has a concentration gradient in which an amount of boron (B) decreases and an amount of cobalt (Co) increases from a surface thereof toward a center of a positive electrode active material particle, and the amount of the boron (B) among total metals excluding lithium in the positive electrode active material satisfies a range of 0.1 mol% to 1.25 mol%, gelation is reduced during preparation of a slurry and a battery including the positive electrode active material has an effect of improving capacity characteristics, resistance characteristics, and life characteristics.

### BRIEF DESCRIPTION OF THE DRAWINGS

FIG. 1 is a scanning electron microscope (SEM) image of a positive electrode active material prepared in Example 1.
FIG. 2 is an SEM image of a positive electrode active material prepared in Example 2.
FIG. 3 is an SEM image of a positive electrode active material prepared in Example 3.
FIG. 4 is an SEM image of a positive electrode active material prepared in Comparative Example 1.
FIG. 5 is an SEM image of a positive electrode active material prepared in Comparative Example 2.
FIG. 6 is an SEM image of a positive electrode active material prepared in Comparative Example 3.
FIG. 7 is an SEM image of a positive electrode active material prepared in Comparative Example 4.
FIG. 8 is an SEM image of a positive electrode active material prepared in Comparative Example 5.
FIG. 9 is an electron probe microanalyzer (EPMA) analysis image of the positive electrode active material prepared in Example 1, FIG. 10 is an EPMA analysis image of the positive electrode active material prepared in Example 2, FIG. 11 is an EPMA analysis image of the positive electrode active material prepared in Example 3, and FIG. 12 is an EPMA analysis image of the positive electrode active material prepared in Comparative Example 4.
FIG. 13 is a graph illustrating amounts of boron (B) according to etching time which are analyzed for the positive electrode active materials of Examples 1 to 3 and Comparative Examples 1 to 5 using electron spectroscopy for chemical analysis (ESCA).
FIG. 14 is a graph illustrating amounts of cobalt (Co) according to etching time which are analyzed for the positive electrode active materials of Examples 1 to 3 and Comparative Examples 1 to 3 using ESCA.

### BEST MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression 'primary particle' denotes a smallest particle unit which is distinguished as one body when a cross section of a positive electrode active material is observed through a scanning electron microscope (SEM), wherein it may be composed of one grain or a plurality of grains.

In the present invention, the expression 'secondary particle' denotes a secondary structure formed by aggregation of a plurality of primary particles. An average particle diameter of the secondary particle may be measured using a particle size analyzer.

In this specification, 'a form of a single particle' is a concept in contrast to a form of a spherical secondary particle which is formed by aggregation of tens to hundreds of primary particles that are prepared by a conventional method, wherein it means a form composed of 50 or less primary particles. Specifically, the form of a single particle in the present invention may be a single particle composed of one primary particle, or may be in the form of a secondary particle in which 2 or more, 3 or more, 4 or more, 5 or more, or 10 or more, and 30 or less, 35 or less, 40 or less, 45 or less, or 50 or less primary particles are aggregated.

The expression 'average particle diameter (D₅₀)' in the present invention denotes a particle diameter at 50% of cumulative distribution of volume according to the particle diameter. After dispersing measurement target powder in a dispersion medium, the dispersion medium is introduced into a commercial laser diffraction particle size measurement instrument (e.g., Microtrac S3500), a particle size distribution is calculated by measuring a difference in diffraction patterns due to a particle size when particles pass through a laser beam, and the D₅₀ may be measured by calculating a particle diameter at 50% of the cumulative distribution of volume according to the particle diameter using the measurement instrument.

### Positive Electrode Active Material

Hereinafter, a positive electrode active material of the present invention will be described.

The positive electrode active material of the present invention includes a lithium composite transition metal oxide in a form of a single particle; and a coating portion formed on a surface of the lithium composite transition metal oxide, wherein the coating portion includes a first coating portion; and a second coating portion, wherein the first coating portion is in a form of a discontinuously formed island, and the second coating portion is in a form of a continuously formed coating layer, wherein the first coating portion has a concentration gradient in which an amount of boron (B) decreases and an amount of cobalt (Co) increases from a surface thereof toward a center of a positive electrode active material particle, and the amount of the boron (B) among total metals excluding lithium in the positive electrode active material is in a range of 0.1 mol% to 1.25 mol%.

The lithium composite transition metal oxide is in the form of a single particle composed of 50 or less primary particles. That is, the lithium composite transition metal oxide is a single particle or in the form of a single particle in which 2 to 50 particles are aggregated. Specifically, the lithium composite transition metal oxide may be in a form composed of 2 to 40 primary particles, 2 to 30 primary particles, 2 to 20 primary particles, and 2 to 10 primary particles, and may preferably be in a form composed of 2 to 10 primary particles. The form of a single particle is distinct from a secondary particle in which more than 50 primary particles are aggregated.

In a case in which the lithium composite transition metal oxide is in the form of a single particle, since stability is excellent, the positive electrode active material including the lithium composite transition metal oxide does not break or crack even if the positive electrode active material is rolled, and thus, a side reaction between the positive electrode active material and an electrolyte solution may be reduced. As a result, since durability against volume changes during charge and discharge of a battery is improved, life characteristics may be improved. With respect to a lithium composite transition metal oxide which is a secondary particle, particle cracking easily occurs during an electrode rolling process, and, as a result, since a surface area of a positive electrode active material is increased, degradation of storage and lifetime performance at high temperatures is intensified. Particularly, with respect to a lithium composite transition metal oxide including a high content of nickel, a problem of occurrence of a particle cracking phenomenon during rolling for the preparation of a positive electrode occurs more, and, in this case, a side reaction between the lithium composite transition metal oxide and the electrolyte solution may be increased, and physical properties of a battery may be deteriorated.

The lithium composite transition metal oxide may have a layered (R-3m) structure, and may have a high NiO content before the coating portion is formed on the lithium composite transition metal oxide. Since formation of NiO is induced by high sintering temperature required for the preparation of the lithium composite transition metal oxide, a high content of the NiO may be present on the surface of the lithium composite transition metal oxide and there is a problem in that the NiO reduces energy density of the battery and degrades resistance characteristics and output characteristics.

Since the coating portion is included in the present invention, the side reaction between the positive electrode active material and the electrolyte solution is reduced and there is an effect of reducing the NiO content in the positive electrode active material. Also, since the first coating portion includes boron (B) and cobalt (Co) and the first coating portion has a concentration gradient in which the amount of the boron (B) decreases and the amount of the cobalt (Co) increases from the surface thereof toward the center of the positive electrode active material particle, density of the positive electrode active material is reduced so that there is an effect of improving dispersibility of the positive electrode active material during preparation of a positive electrode slurry, and, since precipitation of the positive electrode active material particles in the positive electrode slurry over time during storage of the prepared positive electrode slurry may be reduced, gelation, that is, a phenomenon, in which aggregation between the particles occurs while the positive electrode active material particles are precipitated downward in the positive electrode slurry, may be reduced. In addition, sphericity of the positive electrode active material may be increased, and, accordingly, an effect of reducing collisions between the particles and friction between a stirrer and the particles during the preparation of the positive electrode slurry may be exhibited. In contrast, in a case in which the lithium composite transition metal oxide does not include a coating portion, there is a problem of poor life characteristics due to the side reaction between the positive electrode active material and the electrolyte solution, in a case in which the first coating portion does not include boron, there is a problem in that the gelation excessively occurs during the preparation of the positive electrode slurry due to poor dispersibility of the positive electrode active material, and, in a case in which the first coating portion does not have a concentration gradient, there is a problem of poor life characteristics.

In addition, according to the present invention, the amount of the boron (B) among the total metals excluding lithium in the positive electrode active material is in a range of 0.1 mol% to 1.25 mol%. Specifically, the amount of the boron (B) may be 0.1 mol% or more, or 0.2 mol% or more, and may be 1.1 mol% or less, 1.2 mol% or less, or 1.25 mol% or less. In a case in which the amount of the boron (B) is within the above range, there is an effect of reducing the gelation of the positive electrode slurry due to a decrease in the density of the positive electrode active material, an improvement in the dispersibility of the positive electrode active material, and an increase in the sphericity. Particularly, in a case in which the amount of the boron (B) is in a range of 0.13 mol% to 1.1 mol%, there is an effect of improving capacity characteristics. In contrast, in a case in which the amount of the boron (B) is less than 0.1 mol%, there is a problem in that it is difficult to increase the dispersibility of the positive electrode active material or improve the sphericity, and, in a case in which the amount of the boron (B) is greater than 1.25 mol%, there is a problem in that the resistance characteristics are poor.

According to an embodiment of the present invention, the first coating portion may be dispersed and distributed on at least one of the surface of the lithium composite transition metal oxide and a surface of the second coating portion. The 'dispersed and distributed' means a form which is not formed by being continuously connected, but is formed by being dispersed in dots. In this case, the first coating portion has an effect of improving the capacity characteristics and life characteristics while not acting as resistance.

According to an embodiment of the present invention, the first coating portion may include at least one compound selected from the group consisting of lithium cobalt oxide, lithium boron oxide, and lithium cobalt-boron oxide. In this case, since the lithium byproduct on the surface of the positive electrode active material is reduced and the dispersibility of the positive electrode active material is improved, there is an effect of suppressing the gelation during the preparation of the positive electrode slurry.

According to an embodiment of the present invention, the first coating portion and the second coating portion may each independently include boron (B) and cobalt (Co), and may optionally include at least one coating element selected from the group consisting of Co, aluminum (Al), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf). In this case, since the lithium byproduct on the surface of the positive electrode active material is reduced and the dispersibility of the positive electrode active material is improved, there is the effect of suppressing the gelation during the preparation of the positive electrode slurry.

According to an embodiment of the present invention, the lithium composite transition metal oxide may have a composition represented by Formula 1 below.

[Formula 1] LiₐNi_{b}Co_{c}Mn_{d}M¹ₑO₂

In Formula 1,
M¹ is at least one selected from the group consisting of Al, B, Ba, Ce, Cr, F, Mg, V, Ti, Fe, Zr, Zn, Si, Y, Nb, Ga, Sn, Mo, W, P, S, Sr, Ta, La, and Hf, and
0.9≤a≤1.1, 0.6≤b<1, 0<c<0.4, 0<d<0.4, and 0≤e<0.1.

In Formula 1,
M¹ is a doping element, wherein, specifically, M¹ is at least one selected from the group consisting of Al, B, Ba, Ce, Cr, F, Mg, V, Ti, Fe, Zr, Zn, Si, Y, Nb, Ga, Sn, Mo, W, P, S, Sr, Ta, La, and Hf. M¹ is not necessarily included, but may improve the capacity characteristics and life characteristics.

a may be 0.9 or more, or 1.0 or more, and may be 1.1 or less. When a satisfies the above range, high safety and high energy density per unit volume may be achieved.

b is a molar ratio of nickel (Ni) among total metals excluding lithium in the lithium composite transition metal compound, wherein b may be 0.6 or more, 0.7 or more, 0.8 or more, or 0.9 or more, and may be 0.96 or less, 0.97 or less, 0.98 or less, 0.99 or less, or less than 1. When b satisfies the above range, high energy characteristics may be achieved.

c is a molar ratio of cobalt (Co) among the total metals excluding lithium in the lithium composite transition metal compound, wherein c may be greater than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, or less than 0.4. When c satisfies the above range, stability may be improved during charge and discharge processes, and rate capability may be improved.

d is a molar ratio of manganese (Mn) among the total metals excluding lithium in the lithium composite transition metal compound, wherein d may be greater than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, or less than 0.4. When d satisfies the above range, high-temperature stability may be increased and the side reaction with the electrolyte solution may be relatively reduced.

e is a molar ratio of M⁵ among the total metals excluding lithium in the lithium composite transition metal compound, wherein e may be 0 or more, 0.01 or more, 0.02 or more, 0.03 or more, 0.04 or more, or 0.05 or more, and may be 0.06 or less, 0.07 or less, 0.08 or less, 0.09 or less, or less than 1. When e satisfies the above range, stability of a crystal structure of the positive electrode active material may be improved and a particle shape may be improved.

According to an embodiment of the present invention, the first coating portion may include a compound having a composition represented by Formula 2 below.

[Formula 2] Li_{f}B_{g}M²ₕM³ᵢOⱼ

In Formula 2,
M² is at least one selected from the group consisting of Ni, Co, and Mn,
M³ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0<f≤4, 1≤g≤4, 0≤h≤1, 0≤i≤1, and 1≤j≤8.

In Formula 2, M² is at least one selected from the group consisting of Ni, Co, and Mn, and M³ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf.

f may be 0 or more, and may be 1 or less, 2 or less, 3 or less, or 4 or less.

g may be 1 or more, and may be 2 or less, 3 or less, or 4 or less.

h may be 0 or more, and may be 0.5 or less, or 1 or less.

i may be 0 or more, and may be 0.5 or less, or 1 or less.

j may be 1 or more, 2 or more, or 3 or more, and may be 4 or less, 5 or less, 6 or less, 7 or less, or 8 or less.

In a case in which f, g, h, i, and j are within the above ranges, capacity characteristics and life characteristics of a battery prepared may be improved.

According to an embodiment of the present invention, the second coating portion may include a compound having a composition represented by Formula 3 below.

[Formula 3] LiₖCoₗBₘM⁴ₙM⁵ₒO₂

In Formula 3,
M⁴ is at least one selected from the group consisting of Ni and Mn,
M⁵ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0.9≤k≤1.1, 0<1<1, 0<m≤1, 0≤n<0.4, and 0≤o<0.4.

In Formula 3, M⁴ is at least one selected from the group consisting of Ni and Mn, and M⁵ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf. M⁵ is not necessarily included, but may improve the capacity characteristics and life characteristics.

k may be 0.9 or more, or 1 or more, and may be 1.1 or less.

l may be greater than 0, and may be 0.5 or less, or less than 1.

m may be greater than 0, and may be 0.5 or less, or 1 or less.

n may be 0 or more, and may be 0.2 or less, or 0.4 or less.

o may be 0 or more, and may be 0.2 or less, or less than 0.4.

In a case in which k, l, m, n, and o are within the above ranges, the capacity characteristics and life characteristics of the battery prepared may be improved.

According to an embodiment of the present invention, the first coating portion may include the compound having the composition represented by Formula 2, and the second coating portion may include the compound having the composition represented by Formula 3.

In this specification, the surface of the lithium composite transition metal oxide means an outermost surface of the lithium composite transition metal oxide. In addition, a region having a constant thickness from the outermost surface of the lithium composite transition metal oxide toward the center of the positive electrode active material particle may be expressed as a surface portion. The surface portion may be a region having a depth of 1 nm to 50 nm, specifically, 5 nm to 30 nm from the outermost surface of the lithium composite transition metal oxide toward the center of the positive electrode active material particle. In contrast to the surface portion, an interior excluding the surface portion in the lithium composite transition metal oxide may be referred to as a core.

The surface portion of the lithium composite transition metal oxide may be doped with cobalt, boron, or cobalt and boron which are diffused from the coating portion.

The coating portion may be formed on the surface as the outermost surface of the lithium composite transition metal oxide, and the coating portion may be formed on a portion or all of the outer surface.

According to an embodiment of the present invention, a total area of the coating portion may be in a range of 10% to 100% of a total surface area of the lithium composite transition metal oxide. The total area of the coating portion may be 10% or more, 15% or more, 20% or more, 25% or more, 30% or more, 35% or more, 40% or more, 45% or more, or 50% or more, and may be 55% or less, 60% or less, 65% or less, 70% or less, 75% or less, 80% or less, 90% or less, 95% or less, or 100% or less of the total surface area of the lithium composite transition metal oxide. In a case in which the total area of the coating portion is within the above range, the coating portion may prevent the side reaction between the positive electrode active material and the electrolyte solution while not acting as resistance, and has an effect of improving the life characteristics and capacity characteristics of the battery.

According to an embodiment of the present invention, the first coating portion and the second coating portion may have the same or different compositions. The composition may be a comparison of an amount of the first coating portion and an amount of the second coating portion within a region twice a diameter of the first coating portion which is centered on the first coating portion. If the compositions are different, amounts of the coating element excluding B and Co may be different, and the amount of the coating element excluding B and Co in the first coating portion may be higher than the amount of coating element excluding B and Co in the second coating portion.

According to an embodiment of the present invention, an average particle diameter (D₅₀) may be in a range of 3 µm to 20 µm. Specifically, the average particle diameter (D₅₀) may be 3 µm or more, or 3.5 µm or more, and may be 5 µm or less, 6 µm or less, 7 µm or less, 8 µm or less, 9 µm or less, 10 µm or less, 11 µm or less, 12 µm or less, 13 µm or less, 14 µm or less, 15 µm or less, 16 µm or less, 17 µm or less, 18 µm or less, 19 µm or less, or 20 µm or less. In a case in which the average particle diameter is within the above range, excellent electrode density may be achieved and the capacity characteristics may be improved.

### Method of Preparing Positive Electrode Active Material

Next, a method of preparing a positive electrode active material of the present invention will be described. The method of preparing a positive electrode active material of the present invention is a method of preparing the positive electrode active material according to the present invention.

The positive electrode active material according to the present invention may be prepared by including steps of: (1) mixing a lithium composite transition metal oxide in a form of a single particle with a cobalt-containing raw material and optionally mixing a coating element-containing raw material to prepare a mixture; (2) sintering the mixture to prepare a sintered product; and (3) mixing the sintered product with a boron-containing raw material, and performing a heat treatment to form a coating portion including cobalt (Co) and boron (B) on the lithium composite transition metal oxide, wherein the coating element is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and the sintering is performed at a temperature of 600°C to 800°C.

The above-described positive electrode active material according to the present invention may be prepared by appropriately adjusting types of the raw materials, a mixing ratio of the raw materials, the heat treatment step, the heat treatment temperature, a heat treatment heating rate, or a heat treatment atmosphere.

Hereinafter, each step of the present invention will be described in detail.

### Step (1)

The present invention includes a step (1) of mixing a lithium composite transition metal oxide in a form of a single particle with a cobalt-containing raw material and optionally mixing a coating element-containing raw material to prepare a mixture.

With respect to the mixture of the present invention, the lithium composite transition metal oxide of the present invention is mixed by a dry mixing method using a solid-phase raw material mixture, wherein the dry mixing method has an advantage of being able to mass-produce through a relatively simple synthesis process.

According to an embodiment of the present invention, the cobalt-containing raw material may be mixed in an amount of 0.1 mol% to 10 mol%, particularly 0.5 mol% to 5 mol%, and more particularly 1 mol% to 3 mol% based on the lithium composite transition metal oxide. In a case in which the cobalt raw material is mixed in an amount within the above range, a coating portion including cobalt may be sufficiently formed on the lithium composite transition metal oxide while an unreacted cobalt compound is not remained on the surface of the particle.

The cobalt-containing raw material may be an oxide, hydroxide, oxyhydroxide, carbonate, sulfate, halide, sulfide, acetate, nitrate, or carboxylate containing cobalt, or a combination thereof, and, for example, may include Co(OH)₂, CoOOH, Co(OCOCH₃)₂ · 4H₂O, Co(NO₃)₂ · 6H₂O, or Co(SO₄)₂ · 7H₂O, any one thereof or a mixture of two or more thereof may be used, and Co(OH)₂ may specifically be used.

The coating element is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf. The coating element-containing raw material, for example, may be an oxide, hydroxide, oxyhydroxide, carbonate, sulfate, halide, sulfide, acetate, nitrate, or carboxylate containing the coating element, or a combination thereof, and specifically, may include Co(OH)₂, ZrO₂, Zr(OH)₄, ZnO, TiO₂, WO₃, Al₂O₃, Al(OH)₃, Al₂(SO₄)₃ ·xH₂O, AlCl₃, C₂H₅O₄Al, Al-isopropoxide, Al(NO₃)₃, AlF, Li₃WO₄, (NH₄)₁₀W₁₂O₄₁ · 5H₂O, or NH₄H₂PO₄, but is not limited thereto.

According to an embodiment of the present invention, the coating element-containing raw material may be used in an amount such that an amount of the coating element is 0.001 mol% to 10 mol%, specifically, 0.005 mol% to 5 mol% based on the number of moles of the total metals in the lithium composite transition metal oxide. In a case in which the mixing amount of the coating element-containing raw material is within the above range, an effect of effectively suppressing the side reaction with the electrolyte solution may be expected, and electrochemical properties may be further improved.

According to an embodiment of the present invention, the lithium composite transition metal oxide in the form of a single particle may be prepared by a method including steps of: (A) preparing a primary sintered product by mixing a composite transition metal hydroxide containing nickel, cobalt, and manganese with a first lithium-containing raw material and performing primary sintering at a temperature of 800°C to 950°C; and (B) preparing a secondary sintered product by performing secondary sintering on the primary sintered product at a temperature of 680°C to 850°C.

Specifically, the primary sintering may be performed at a temperature of 800°C or higher, or 820°C or higher, and 850°C or less, 900°C or less, or 950°C or less, and the second sintering may be performed at a temperature of 680°C or higher, 700°C or higher, or 720°C or higher, and 750°C or less, 760°C or less, 770°C or less, 780°C or less, 790°C or less, 800°C or less, 810°C or less, 820°C or less, 830°C or less, 840°C or less, or 850°C or less. In a case in which the primary sintering is performed in the above temperature range, sufficient energy required for single particle formation may be supplied, and, in a case in which the secondary sintering is performed in the above temperature range, crystallinity of the lithium composite transition metal oxide may be increased.

The primary sintering may be performed in an oxygen atmosphere, in terms of preventing degradation of the lithium composite transition metal oxide into a rock salt structure.

The primary sintering may be performed for 3 hours or more, 4 hours or more, 5 hours or more, or 6 hours or more, and 9 hours or less, 10 hours or less, 11 hours or less, or 12 hours or less, in terms of aggregating the primary particles and improving crystallinity of the primary sintered product.

The secondary sintering may be performed in an oxygen atmosphere, in terms of preventing the degradation of the lithium composite transition metal oxide into the rock salt structure.

The secondary sintering may be performed for 3 hours or more, and 9 hours or less, 10 hours or less, 11 hours or less, or 12 hours or less, in terms of increasing a degree of crystallinity of the internal crystal structure of the positive electrode active material.

According to an embodiment of the present invention, immediately after step (A), a step (A1) of grinding the primary sintered product may be further included. In this case, process efficiency and quality of the positive electrode active material may be improved by controlling a particle size. The primary sintered product may be ground such that an average particle diameter (D₅₀) is in a range of 3 µm to 20 µm, in terms of preventing an increase in initial resistance.

The grinding of step (A1) may be performed using a pin mill, an air classifying mill (ACM), or a jet mill. With respect to the pin mill, milling may be performed at 18,000 rpm, with respect to the ACM, classification may be performed at 6,000 rpm and main milling may be performed at 12,000 rpm using equipment by Hosokawa Micron Corporation, and, with respect to the jet mill, classification may be performed at 3,500 rpm and milling may be performed at a pressure of 6 bars using equipment by ZM solution. In this case, a positive electrode active material having a desired average particle diameter (D₅₀) may be easily obtained.

### Step (2)

Thereafter, a step (2) of sintering the mixture to prepare a sintered product is included.

The sintering is performed at a temperature of 500°C to 800°C. Specifically, the sintering is performed at a temperature of 500°C or higher, 550°C or higher, 600°C or higher, 650°C or higher, or 700°C or higher, and 750°C or less, or less than 800°C. In a case in which the sintering temperature satisfies the above range, since the coating portion including cobalt is formed in the form of a discontinuous island on the lithium composite transition metal oxide, specifically, the surface of the lithium composite transition metal oxide during a heating process for the sintering, the cobalt present as a LiCoO₂ phase may penetrate into the lithium composite transition metal oxide to an appropriate depth to appropriately change a NiO layer, as a degenerated layer, into a nickel cobalt manganese (NCM) oxide layered structure, and accordingly, excellent effects may be exhibited in cell performance, such as charge and discharge capacity, initial efficiency, and initial resistance, by allowing an oxidation number gradient layer, in which the oxidation number of nickel increases toward the outermost surface, to be included in the surface portion while the surface portion of the lithium composite transition metal oxide has a layered (R-3m) structure. In contrast, in a case in which the sintering temperature is less than 500°C, since a thickness of the coating portion becomes thick and the coating portion is excessively formed, it is difficult to achieve the advantages of the formation of the coating portion as described above, and, in a case in which the sintering temperature is 800°C or higher, since the lithium composite transition metal oxide may be deeply doped with the cobalt, the coating portion may not be properly formed in the surface portion and a coating portion in the form of an island may not be formed.

The sintering may be performed for 2 hours or more, and 6 hours or less, 9 hours or less, or 12 hours or less. In a case in which the sintering is performed within the above time range, excellent productivity may be achieved, and uniform sintering may also be achieved.

According to an embodiment of the present invention, if step (2) is performed, a coating portion including Co may be formed on the lithium composite transition metal oxide, and specifically, the second coating portion represented by Formula 3 described in this specification may be formed.

### Step (3)

A step (3) of mixing the sintered product with a boron-containing raw material, and performing a heat treatment to form a coating portion including cobalt (Co) and boron (B) on the lithium composite transition metal oxide is included.

The boron-containing raw material may be an oxide, hydroxide, oxyhydroxide, carbonate, sulfate, halide, sulfide, acetate, nitrate, or carboxylate containing boron, or a combination thereof, and for example, may include B(OH)₃, H₂BO₃, HBO₂, H₃BO₃, H₂B₄O₇, B₂O₃, C₆H₅B(OH)₂, (C₆H₅O)₃B, [(CH₃(CH₂)₃O)₃B, C₃H₉B₃O₆, or (C₃H₇O₃)B, but is not limited thereto.

According to an embodiment of the present invention, the boron-containing raw material may be mixed such that an amount of the boron-containing raw material is in a range of 0.15 mol% to 1.25 mol%, particularly 0.20 mol% to 1.10 mol%, and more particularly 0.25 mol% to 1.05 mol% based on the sintered product. In a case in which the mixing amount of the boron-containing raw material is within the above range, the amount of boron in the coating portion formed may satisfy an appropriate range.

According to an embodiment of the present invention, the heat treatment may be performed at a temperature of 200°C or higher, 250°C or higher, or 300°C or higher, and 350°C or less, 400°C or less, 420°C or less, 440°C or less, 460°C or less, 480°C or less, or 500°C or less. In a case in which the heat treatment temperature satisfies the above range, the boron-containing raw material may appropriately form an amorphous boron coating portion other than a boron oxide. If the heat treatment temperature is excessively high, properties as a positive electrode active material may be impaired by forming a boron oxide on the surface of the lithium composite transition metal oxide, and if the heat treatment temperature is excessively low, the coating portion may not be formed properly.

The heat treatment may be performed for 2 hours or more, or 3 hours or more, and 6 hours or less, 7 hours or less, 8 hours or less, 9 hours or less, 10 hours or less, 11 hours or less, or 12 hours or less. In a case in which the heat treatment is performed within the above time range, excellent productivity may be achieved, and uniform sintering may also be achieved.

According to an embodiment of the present invention, if step (3) is performed, a coating portion including B may be formed on the lithium composite transition metal oxide, and specifically, the first coating portion represented by Formula 2 or the second coating portion represented by Formula 3 described in this specification may be formed.

According to an embodiment of the present invention, since cobalt, boron, or cobalt and boron diffuse from the surface of the lithium composite transition metal oxide toward the center of the positive electrode active material particle in steps (1) to (3), a coating portion may be formed. Accordingly, the first coating portion may have a concentration gradient in which the amount of boron (B) decreases and the amount of cobalt (Co) increases from the surface thereof toward the center of the positive electrode active material particle.

According to another embodiment of the present invention, a positive electrode including the above-described positive electrode active material is provided.

Specifically, the positive electrode includes a positive electrode collector and a positive electrode active material layer which is formed on the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the above-described positive electrode active material.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the above-described positive electrode active material as well as optionally the binder and the conductive agent in a solvent, is applied onto the positive electrode collector, and the positive electrode may then be prepared by drying and rolling the coated positive electrode collector. In this case, types and amounts of the positive electrode material, the binder, and the conductive agent are the same as those previously described.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

According to another embodiment of the present invention, an electrochemical device including the positive electrode is provided. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, wherein the positive electrode is the same as described above. Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOₓ (0<x<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

As an example, the negative electrode active material layer may be prepared by applying a composition for forming a negative electrode, which is prepared by dissolving or dispersing optionally the binder and the conductive agent as well as the negative electrode active material in a solvent, onto the negative electrode collector and drying the coated negative electrode collector, or may be prepared by casting the composition for forming a negative electrode on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### MODE FOR CARRYING OUT THE INVENTION

### Preparation Example

### Preparation Example 1

After a composite transition metal hydroxide [composition: Ni_{0.95}Co_{0.03}Mn_{0.02}(OH)₂, average particle diameter (D₅₀) of 3.5 µm] and LiOH were mixed such that a molar ratio of (Ni+Co+Mn):Li was 1:1.05 and primarily sintered at 850°C for 6 hours in an oxygen atmosphere to prepare a primary sintered product, the primary sintered product was disintegrated and then secondarily sintered at 750°C for 9 hours in an oxygen atmosphere to prepare a lithium composite transition metal oxide which was in a form of a single particle and had a composition represented by LiNi_{0.95}Co_{0.03}Mn_{0.02}O₂ .

The lithium composite transition metal oxide and Co(OH)₂ in a form of powder (Huayou Cobalt Co., Ltd.) were added to a reactor such that a molar ratio of the lithium composite transition metal oxide to the Co(OH)₂ was 98:2, and Al(OH)₃ was added in an amount of 500 ppm based on a total weight of the lithium composite transition metal oxide and then dry-mixed using an acoustic mixer to prepare a mixture. The mixture was sintered at 700°C for 5 hours to obtain a sintered product in a cake state, and the sintered product was ground to prepare a sintered product in a form of powder.

### Example 1

The sintered product prepared in Preparation Example 1 and B(OH)₃ were dry-mixed such that a molar ratio of the sintered product to the B(OH)₃ was 99.75:0.25, and then heat-treated at 330°C for 5 hours to obtain a positive electrode active material in a cake state, and the positive electrode active material was ground to prepare a positive electrode active material in a form of powder. The positive electrode active material had a coating portion including cobalt and boron formed on the lithium composite transition metal oxide, and had an average particle diameter (D₅₀) of 3.8 µm.

### Example 2

A positive electrode active material was prepared in the same manner as in Example 1 except that the sintered product prepared in Preparation Example 1 and B(OH)₃ were dry-mixed such that the molar ratio of the sintered product to the B(OH)₃ was 99.5:0.5.

### Example 3

A positive electrode active material was prepared in the same manner as in Example 1 except that the sintered product prepared in Preparation Example 1 and B(OH)₃ were dry-mixed such that the molar ratio of the sintered product to the B(OH)₃ was 99.0:1.0.

### Comparative Example 1

The sintered product in the form of powder, which had been prepared in Preparation Example 1, was used as a positive electrode active material of Comparative Example 1.

### Comparative Example 2

A positive electrode active material was prepared in the same manner as in Example 1 except that the sintered product prepared in Preparation Example 1 and B(OH)₃ were dry-mixed such that the molar ratio of the sintered product to the B(OH)₃ was 99.9:0.1.

### Comparative Example 3

A positive electrode active material was prepared in the same manner as in Example 1 except that the sintered product prepared in Preparation Example 1 and B(OH)₃ were dry-mixed such that the molar ratio of the sintered product to the B(OH)₃ was 98.5:1.5.

### Comparative Example 4

The lithium composite transition metal oxide prepared in Preparation Example 1 and Co(OH)₂ in the form of powder (Huayou Cobalt Co., Ltd.) were added to a reactor such that a molar ratio of the lithium composite transition metal oxide to the Co(OH)₂ was 98:2, and Al(OH)₃ was added in an amount of 500 ppm based on a total weight of the lithium composite transition metal oxide and then dry-mixed using an acoustic mixer to prepare a mixture. The mixture was sintered at 800°C for 3 hours to obtain a sintered product in a cake state, and the sintered product was ground to prepare a sintered product in a form of powder. A positive electrode active material was prepared in the same manner as in Example 1 except that the sintered product prepared in Preparation Example 1 and B(OH)₃ were dry-mixed such that the molar ratio of the sintered product to the B(OH)₃ was 99.5:0.5.

### Comparative Example 5

A positive electrode active material was prepared in the same manner as in Example 2 except that, after a composite transition metal hydroxide [composition: Ni_{0.95}Co_{0.03}Mn_{0.02}(OH)₂, average particle diameter (D₅₀) of 3.5 µm] and LiOH were mixed such that a molar ratio of (Ni+Co+Mn):Li was 1:1.05 and primarily sintered at 650°C for 3 hours in an oxygen atmosphere to prepare a primary sintered product, the primary sintered product was disintegrated and then secondarily sintered at 690°C for 4 hours in an oxygen atmosphere to prepare a lithium composite transition metal oxide which was in a form of a secondary particle and had a composition represented by LiNi_{0.95}Co_{0.03}Mn_{0.02}O₂.

**[Table 1]**

| | Mixing ratio (molar ratio) | |
|---|---|---|
| | Sintered product (lithium composite transition metal oxide + coating portion including cobalt) | B(OH)₃ |
| Example 1 | 99.75 | 0.25 |
| Example 2 | 99.5 | 0.5 |
| Example 3 | 99.0 | 1.0 |
| Comparative Example 1 | 100 | 0 |
| Comparative Example 2 | 99.9 | 0.1 |
| Comparative Example 3 | 98.5 | 1.5 |
| Comparative Example 4 | 99.5 | 0.5 |
| Comparative Example 5 | 99.5 | 0.5 |

### Experimental Examples

### Experimental Example 1: SEM Image Analysis

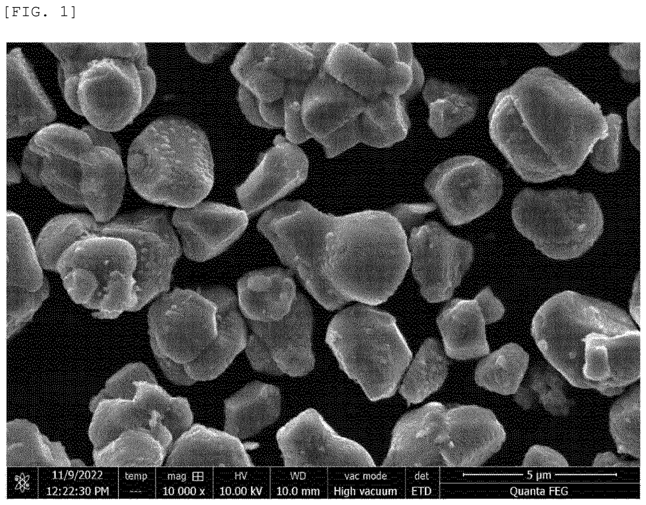

Scanning electron microscope (SEM) images of each of the positive electrode active materials prepared in the examples and the comparative examples were taken using a scanning electron microscope (JEOL Ltd., JSM-7610F), and the SEM images are illustrated in FIGS. 1 to 8.
FIG. 1 is the scanning electron microscope (SEM) image of the positive electrode active material prepared in Example 1.

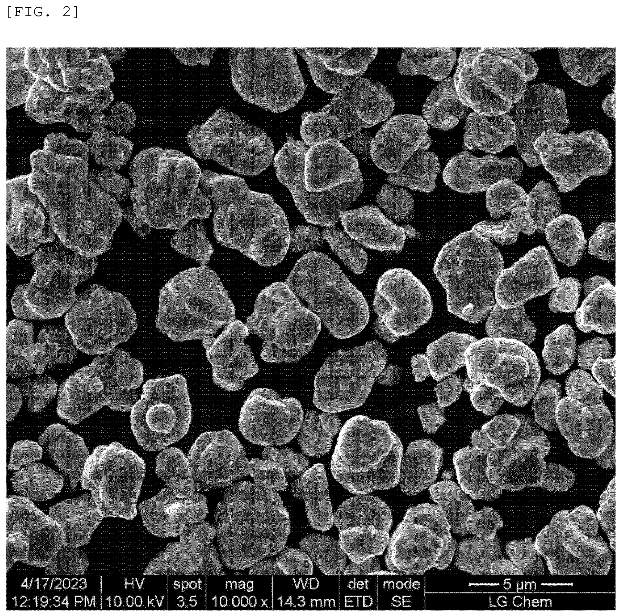

FIG. 2 is the SEM image of the positive electrode active material prepared in Example 2.

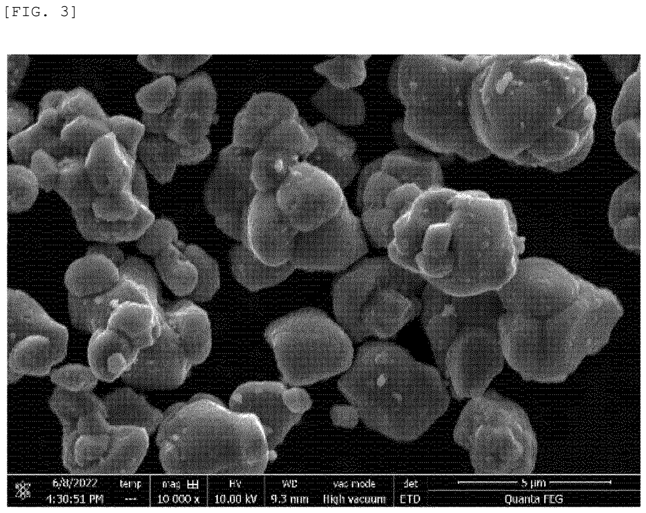

FIG. 3 is the SEM image of the positive electrode active material prepared in Example 3.

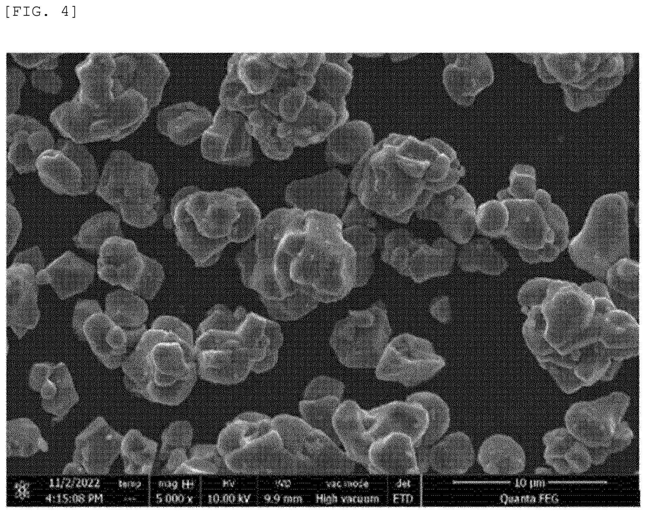

FIG. 4 is the SEM image of the positive electrode active material prepared in Comparative Example 1.

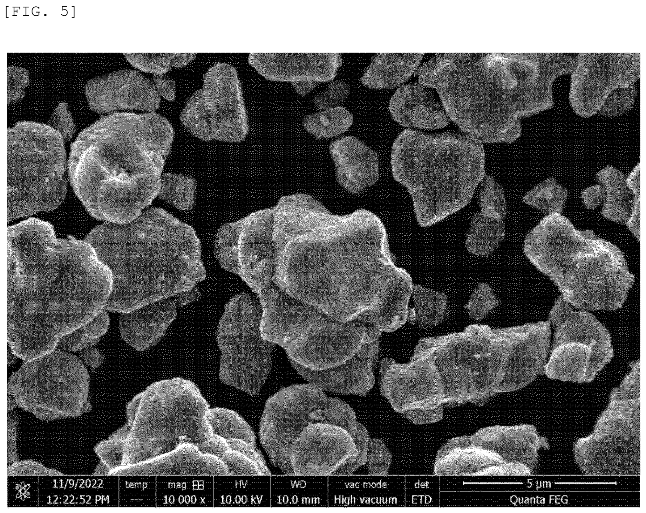

FIG. 5 is the SEM image of the positive electrode active material prepared in Comparative Example 2.

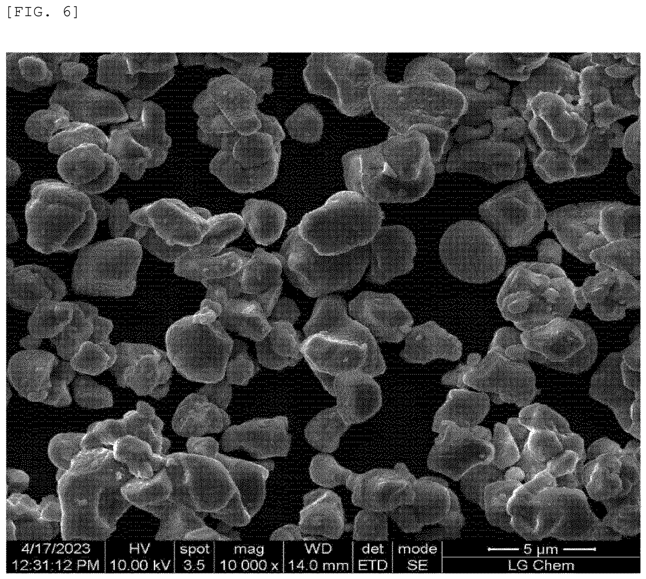

FIG. 6 is the SEM image of the positive electrode active material prepared in Comparative Example 3.

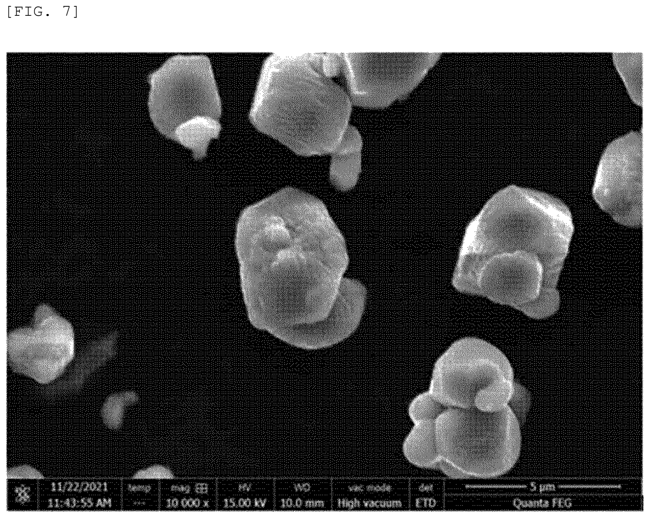

FIG. 7 is the SEM image of the positive electrode active material prepared in Comparative Example 4.

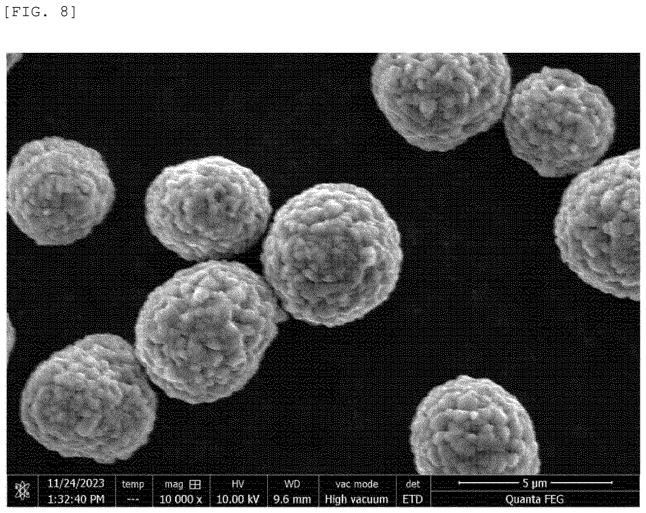

FIG. 8 is the SEM image of the positive electrode active material prepared in Comparative Example 5.

Referring to FIGS. 1 to 3, it was confirmed that the positive electrode active materials prepared in the examples were in the form of a single particle.

In FIGS. 1 to 6, an uneven portion, that is, irregularities, was a portion where the first coating portion was present. Referring to FIGS. 1 to 3, it was confirmed that the first coating portion in the form of a discontinuously formed island was present in the positive electrode active materials prepared in the examples. In contrast, it was confirmed that no irregularities were present, that is, the first coating portion was not included in FIG. 7.

### Experimental Example 2: EPMA Image Analysis

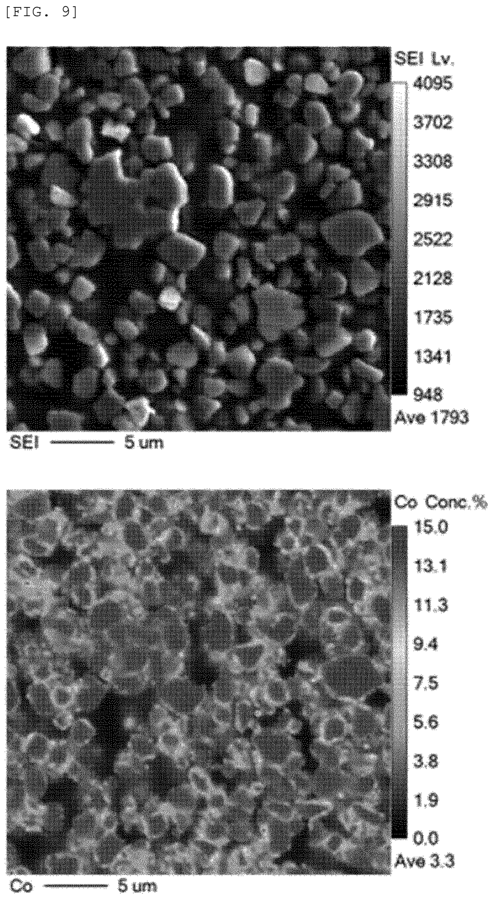

Electron probe microanalyzer (EPMA) cross-sectional analysis was performed to confirm surface coating characteristics of the positive electrode active materials prepared in the examples. First, each of the positive electrode active materials prepared in Examples 1 to 3, a carbon black conductive agent, and a PVDF binder were mixed in a weight ratio of 95:2:3 in an N-methylpyrrolidone (NMP) solvent to prepare each positive electrode slurry. One surface of an aluminum current collector was coated with the prepared positive electrode slurry, dried at 130°C, and then rolled to have an electrode porosity of 20% to prepare a positive electrode. To create a flat surface for the EPMA cross-sectional analysis, the positive electrode was Ar-ion milled at an accelerating voltage of 6 kV using a HITACHI IM-5000 device to obtain a cross section of a positive electrode sample, and cross-sectional images of the positive electrode sample were observed at an accelerating voltage of 15 kV and a probe current of 50 nA using a JEOL JXA-iHP200F instrument and illustrated in FIGS. 9 to 12.

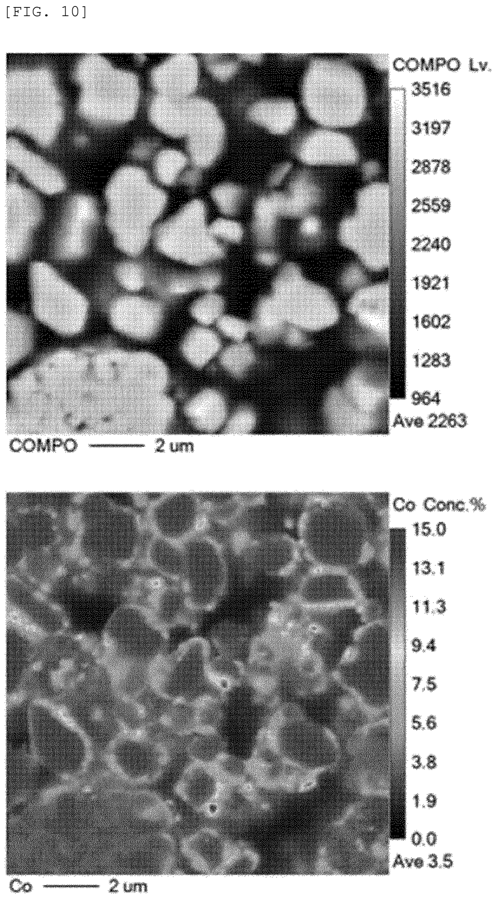

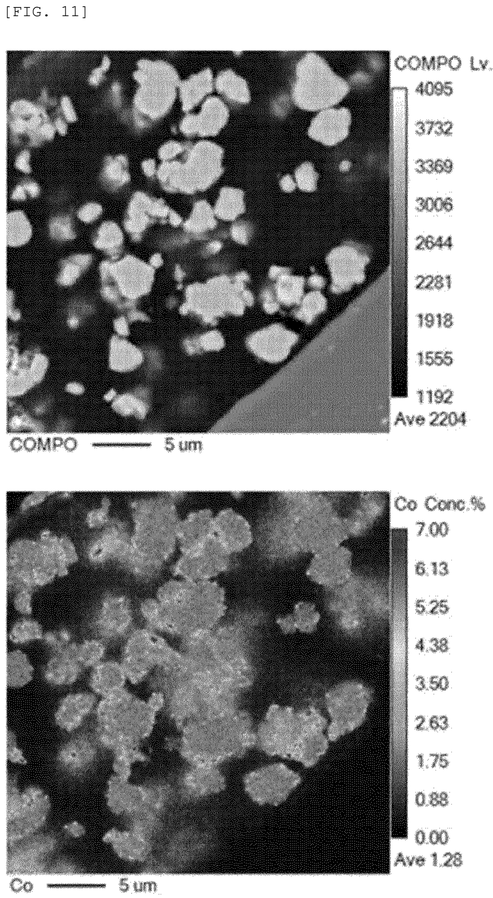

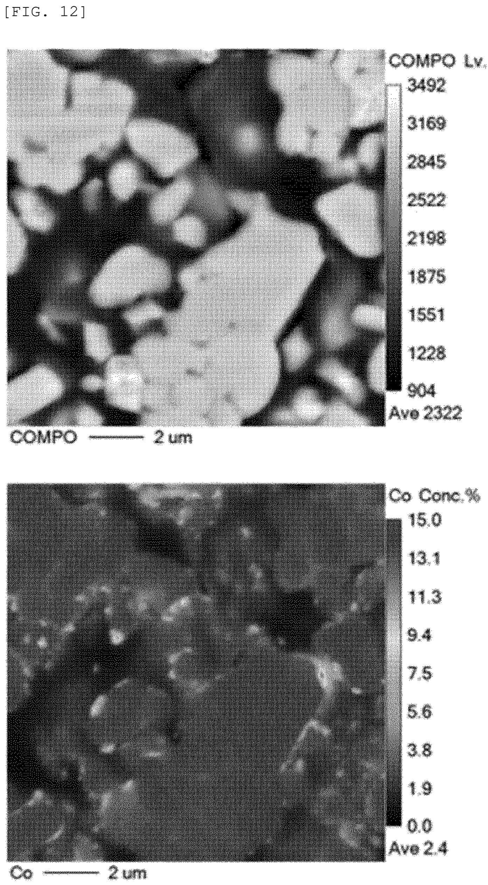

FIG. 9 is the EPMA analysis image of the positive electrode active material prepared in Example 1, FIG. 10 is the EPMA analysis image of the positive electrode active material prepared in Example 2, FIG. 11 is the EPMA analysis image of the positive electrode active material prepared in Example 3, and FIG. 12 is the EPMA analysis image of the positive electrode active material prepared in Comparative Example 4.

In FIGS. 9 to 12, green and red portions were portions where the coating portion including Co was present. Referring to FIGS. 9 to 11, it was confirmed that the green portion was continuously present and the red portion was partially present in the positive electrode active materials prepared in the examples, and it was confirmed that the positive electrode active materials prepared in the examples included the first coating portion in the form of a discontinuously formed island and the second coating portion in the form of a continuously formed coating layer on the lithium composite transition metal oxide.

In contrast, referring to FIG. 12, with respect to the positive electrode active material prepared in Comparative Example 4, it was confirmed that the coating portion including Co was not properly formed because the lithium composite transition metal oxide was deeply doped with cobalt.

### Experimental Example 3: XPS Etching Analysis

Distribution of Co and B in the coating portion present on a surface of each of the positive electrode active materials prepared in the examples and the comparative examples was analyzed using electron spectroscopy for chemical analysis (ESCA) (K-Alpha, Thermo Fisher Scientific Inc.). Etching was performed at a rate of 0.3 nm/10s using an Ar ion source under depth profiling conditions, an amount (atomic %) of each of boron (B) and cobalt (Co), which were contained in a region of 0 to 100 nm from the surface of the positive electrode active material toward the center of the positive electrode active material particle, was measured, the amount (%) of the boron (B) is presented in Table 2, and a ratio of the amount of the boron to the amount of the cobalt was calculated and presented in Table 3 below. For reference, a range below 0.1 mol% corresponds to an error range in XPS etching analysis.

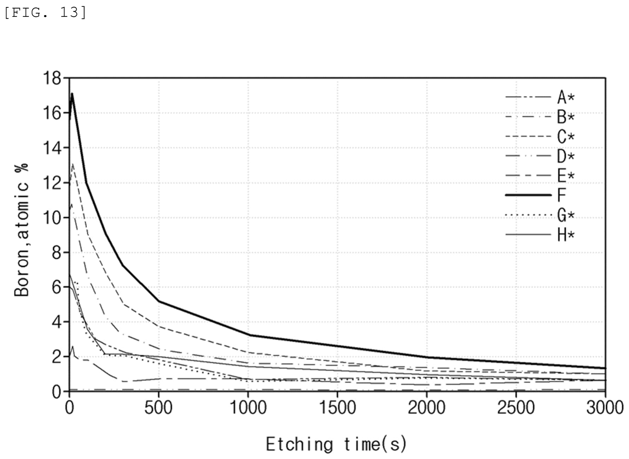

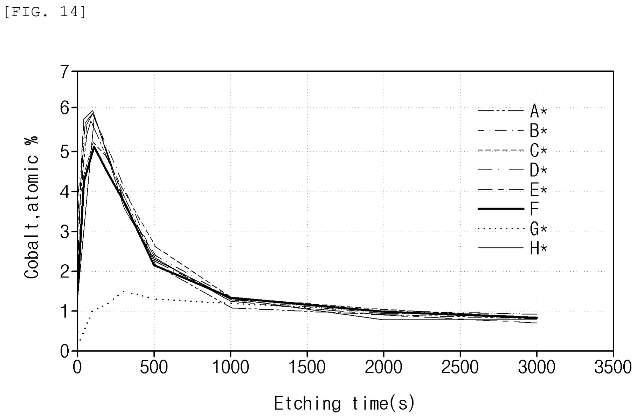

In addition, a graph of the amount of the boron according to etching time is illustrated in FIG. 13, and a graph of the amount of the cobalt according to etching time is illustrated in FIG. 14.

FIG. 13 is the graph illustrating the amounts of the B according to the etching time which were analyzed for the positive electrode active materials of Examples 1 to 3 and Comparative Examples 1 to 5 using ESCA. Specifically, A* represents data for Example 1, B* represents data for Example 2, C* represents data for Example 3, D* represents data for Comparative Example 1, E* represents data for Comparative Example 2, F* represents data for Comparative Example 3, G* represents data for Comparative Example 4, and H* represents data for Comparative Example 5.

FIG. 14 is the graph illustrating the amounts of the Co according to the etching time which were analyzed for the positive electrode active materials of Examples 1 to 3 and Comparative Examples 1 to 3 using ESCA. Specifically, A* represents data for Example 1, B* represents data for Example 2, C* represents data for Example 3, D* represents data for Comparative Example 1, E* represents data for Comparative Example 2, F* represents data for Comparative Example 3, G* represents data for Comparative Example 4, and H* represents data for Comparative Example 5.

Referring to FIG. 13, it was confirmed that the amount of the boron decreased in a region of 0 nm to 90 nm from the surface of the positive electrode active material toward the center of the positive electrode active material particle. In addition, it was confirmed that a thickness of the coating portion including boron was increased as the mixing amount of B(OH)₃ was increased.

Referring to FIG. 14, it was confirmed that the amount of the cobalt increased in a region of 0 nm to 7.5 nm from the surface of the positive electrode active material toward the center of the positive electrode active material particle.

**[Table 2]**

| | Amount of boron (B) (mol%) |
|---|---|
| Example 1 | 0.24 |
| Example 2 | 0.49 |
| Example 3 | 0.98 |
| Comparative Example 1 | 0 |
| Comparative Example 2 | 0.08 |
| Comparative Example 3 | 1.98 |
| Comparative Example 4 | 0.47 |
| Comparative Example 5 | 0.49 |

Referring to Table 2, it was confirmed that the amounts of the boron (B) among total metals excluding lithium in the positive electrode active materials prepared in the examples were in a range of 0.1 mol% to 1.25 mol%.

**[Table 3]**

| Etching time (s) | B/Co ratio | | | | | | | |
|---|---|---|---|---|---|---|---|---|
| | Example 1 | Example 2 | Example 3 | Comparat ive | Comparat ive | Comparat ive | Comparat ive | Comparat ive |
| | | | | Example 1 | Example 2 | Example 3 | Example 4 | Example 5 |
| 0 | 3.123087 | 5.900500 | 6.898834 | 0 | 1.009866 | 10.35061 | 12 | 4.857143 |
| 10 | 1.925641 | 3.513992 | 5.306757 | 0 | 0.712607 | 6.969280 | 20.33333 | 3.421053 |
| 30 | 1.158812 | 2.107079 | 3.492299 | 0 | 0.395641 | 4.707052 | 12.4 | 2.36 |
| 50 | 0.888510 | 1.551961 | 2.568079 | 0 | 0.311056 | 3.448973 | 8 | 1.558824 |
| 100 | 0.576454 | 1.117797 | 1.737073 | 0 | 0.292887 | 2.347476 | 3.2 | 0.610169 |
| 200 | 0.535529 | 0.878985 | 1.402858 | 0 | 0.187640 | 1.991708 | 1.75 | 0.4375 |
| 300 | 0.614604 | 0.881016 | 1.185063 | 0 | 0.145810 | 1.933622 | 1.333333 | 0.583333 |
| 500 | 0.769827 | 1.072537 | 1.459884 | 0 | 0.313358 | 2.374065 | 1.307692 | 0.826087 |
| 1, 000 | 0.501846 | 1.449039 | 1.653654 | 0 | 0.491498 | 2.402251 | 0.416667 | 1.076923 |
| 2, 000 | 0.880644 | 1.426139 | 1.275683 | 0 | 0.411601 | 1.892669 | 0.7 | 1.25 |
| 3, 000 | 0.743173 | 1.083137 | 1.365552 | 0 | 0.801976 | 1.691224 | 0.75 | 0.75 |

Referring to Table 3, with respect to the positive electrode active materials prepared in the examples, it was confirmed that a B/Co ratio was decreased over time up to 200 s. In a region measured over a period of time after 500 s, it was confirmed that B and Co were included, but the B/Co ratio did not have a specific trend.

Accordingly, it may be expected that the first coating portion in the form of a discontinuously formed island was included in a region measured over a time period of 0 s to 200 s, and it may be expected that the first coating portion had a concentration gradient in which the amount of the boron (B) decreased and the amount of the cobalt (Co) increased from the surface thereof toward the center of the positive electrode active material particle.

In addition, in the examples and comparative examples, it was confirmed that the amount of the B present on the surface was increased as the mixing amount of the B(OH)₃ was increased.

### Experimental Example 4: Electrochemical Property Evaluation

Each of the positive electrode active materials prepared in the examples and comparative examples, carbon black (DENKA Company Limited, FX35), and PVdF (Kureha Corporation, KF9709) and BM740H (Zeon Corporation), as a binder, were added in a weight ratio of 95:2:2.8:0.2 to a solvent (N-methylpyrrolidone (NMP)) and then stirred at 1,500 rpm for 95 minutes using a homogenizer (homogenizing disper model 2.5, Primix Corporation) to prepare a positive electrode slurry.

One surface of an aluminum foil current collector was coated with the above-prepared positive electrode slurry, dried at 130°C for 3 hours, and then rolled by a roll pressing method to prepare a positive electrode having a porosity of a positive electrode layer after rolling of 20%.

After an electrode assembly was prepared by disposing a separator between the above-prepared positive electrode and a lithium metal disk negative electrode, the electrode assembly was disposed in a battery case and an electrolyte solution, in which 1 M LiPF₆ was dissolved in an organic solvent of EC/EME/DMC (3:3:4, volume ratio), was injected to prepare a lithium secondary battery.

The above-prepared lithium secondary battery was charged at a constant current (CC) of 0.2 C to 4.25 V in a constant current/constant voltage (CC/CV) mode at 25°C (end current 0.005 C), was subsequently left standing for 20 minutes, and was then discharged at a constant current (CC) of 0.2 C to 2.5 V in a CC mode to measure charge capacity, and a percentage (efficiency (%)) of discharge capacity to the charge capacity was calculated and presented in Table 4 below. In this case, it was set that 1 C = 200 mA/g.

The lithium secondary battery was charged at a constant current (CC) of 0.5 C to 4.25 V in a CC/CV mode at 45°C (end current 0.005 C), was subsequently left standing for 20 minutes, and was then discharged at a constant current (CC) of 1.0 C to 2.5 V in a CC mode. The above charging and discharging cycle was set as one cycle, a total of 50 cycles of the charging and discharging were repeated, and, after measuring discharge capacities (mAh/g) and direct current internal resistances (DCIR) in a first cycle and a 50^{th} cycle, a percentage (capacity retention (%)) of the discharge capacity in the 50^{th} cycle relative to the discharge capacity in the 1^{st} cycle and a percentage (resistance increase rate (%)) of the direct current internal resistance in the 50^{th} cycle relative to the direct current internal resistance (initial resistance (Q)) in the 1^{st} cycle were calculated and presented in Table 4 below.

**[Table 4]**

| | | CHC (0.2C/0.2C. 25°C) | | | CHC (0.5C/1.0C. 45°C) | | |
|---|---|---|---|---|---|---|---|
| | Charge (mAh/g) | Discharge (mAh/g) | Efficien cy (%) | DCIR (Q) | Capacity retention (%) | Initial resistan ce (Ω) | Resistan ce increase rate (%) |
| Example 1 | 247.4 | 215.7 | 87.19 | 23.2 | 95.29 | 13.9 | 157.2 |
| Example 2 | 248.2 | 216.7 | 87.31 | 25.1 | 95.29 | 14.5 | 164.4 |
| Example 3 | 248.4 | 216.4 | 87.12 | 25.9 | 95.33 | 14.7 | 168.6 |
| Comparative Example 1 | 244.2 | 211.8 | 86.73 | 22.4 | 95.06 | 12.8 | 162.3 |
| Comparative Example 2 | 245.4 | 213.4 | 86.96 | 23.3 | 95.32 | 13.5 | 160.6 |
| Comparative Example 3 | 248.1 | 216.2 | 87.14 | 29.5 | 95.35 | 17.1 | 173.1 |
| Comparative Example 4 | 247.5 | 213.8 | 86.4 | 30.14 | 94.25 | 18.2 | 180.4 |
| Comparative Example 5 | 248.1 | 224.3 | 90.4 | 19.8 | 78.22 | 14.3 | 228.6 |

Referring to Table 4, with respect to the batteries including the positive electrode active materials prepared in Examples 1 to 3, it was confirmed that charge/discharge efficiencies were 87% or more, DCIRs were 26 Ω or less, capacity retentions at high temperature were 95% or more, initial resistances were 15 Ω or less, and resistance increase rates were 170% or less. In contrast, with respect to the batteries including the positive electrode active materials prepared in Comparative Examples 1 and 2, it was confirmed that charge/discharge efficiencies were less than 87%, with respect to the battery including the positive electrode active material prepared in Comparative Example 3, it was confirmed that DCIR was greater than 26 Ω, initial resistance at high temperature was greater than 15 Ω, and a resistance increase rate was greater than 170%, with respect to the battery including the positive electrode active material prepared in Comparative Example 5, a capacity retention was less than 95%, and a resistance increase rate was greater than 170%, and, with respect to the battery including the positive electrode active material prepared in Comparative Example 4, it was confirmed that a charge/discharge efficiency was less than 87%, DCIR was greater than 26 Ω, a capacity retention at high temperature was less than 95%, initial resistance was greater than 15 Ω, and a resistance increase rate was greater than 170%.

## Claims

1. A positive electrode active material comprising:
a lithium composite transition metal oxide in a form of a single particle; and
a coating portion formed on a surface of the lithium composite transition metal oxide,
wherein the coating portion comprises a first coating portion; and a second coating portion,
wherein the first coating portion is in a form of a discontinuously formed island, and the second coating portion is in a form of a continuously formed coating layer,
wherein the first coating portion has a concentration gradient in which an amount of boron (B) decreases and an amount of cobalt (Co) increases from a surface of the first coating portion toward a center of a positive electrode active material particle, and
the amount of the boron (B) among total metals excluding lithium in the positive electrode active material is in a range of 0.1 mol% to 1.25 mol%.

2. The positive electrode active material of claim 1, wherein the first coating portion is dispersed and distributed on at least one of the surface of the lithium composite transition metal oxide and a surface of the second coating portion.

3. The positive electrode active material of claim 1, wherein the first coating portion comprises at least one compound selected from the group consisting of lithium cobalt oxide, lithium boron oxide, and lithium cobalt-boron oxide.

4. The positive electrode active material of claim 1, wherein the amount of the boron (B) among the total metals excluding the lithium in the positive electrode active material is in a range of 0.13 mol% to 1.1 mol%.

5. The positive electrode active material of claim 1, wherein the first coating portion and the second coating portion each independently comprise boron (B) and cobalt (Co), and optionally comprise at least one coating element selected from the group consisting of Co, aluminum (Al), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf).

6. The positive electrode active material of claim 1, wherein the lithium composite transition metal oxide has a composition represented by Formula 1:
[Formula 1] LiₐNi_{b}Co_{c}Mn_{d}M¹ₑO₂
wherein, in Formula 1,
M¹ is at least one selected from the group consisting of B, Ba, Ce, Cr, F, Mg, V, Ti, Fe, Zr, Zn, Si, Y, Nb, Ga, Sn, Mo, W, P, S, Sr, Ta, La, and Hf, and
0.9≤a≤1.1, 0.6≤b<1, 0<c<0.4, 0<d<0.4, and 0≤e<0.1.

7. The positive electrode active material of claim 1, wherein the first coating portion comprises a compound having a composition represented by Formula 2:
[Formula 2] Li_{f}B_{g}M²ₕM³ᵢOⱼ
wherein, in Formula 2,
M² is at least one selected from the group consisting of nickel (Ni), Co, and manganese (Mn),
M³ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0<f≤4, 1≤g≤4, 0≤h≤1, 0≤i≤1, and 1≤j≤8.

8. The positive electrode active material of claim 1, wherein the second coating portion comprises a compound having a composition represented by Formula 3:
[Formula 3] LiₖCoₗBₘM⁴ₙM⁵ₒO₂
wherein, in Formula 3,
M⁴ is at least one selected from the group consisting of Ni and Mn,
M⁵ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0.9≤k≤1.1, 0<l<1, 0<m≤1, 0≤n<0.4, and 0≤o<0.4.

9. The positive electrode active material of claim 1, wherein the first coating portion comprises a compound having a composition represented by Formula 2, and the second coating portion comprises a compound having a composition represented by Formula 3:
[Formula 2] Li_{f}B_{g}M²ₕM³ᵢOⱼ
wherein, in Formula 2,
M² is at least one selected from the group consisting of Ni, Co, and Mn,
M³ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0<f≤4, 1≤g≤4, 0≤h≤1, 0≤i≤1, and 1≤j≤8, and
[Formula 3] LiₖCoₗBₘM⁴ₙM⁵ₒO₂
wherein, in Formula 3,
M⁴ is at least one selected from the group consisting of Ni and Mn,
M⁵ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
0.9≤k≤1.1, 0<l<1, 0<m≤1, 0≤n<0.4, and 0≤o<0.4.

10. The positive electrode active material of claim 1, wherein a total area of the coating portion is in a range of 10% to 100% of a total surface area of the lithium composite transition metal oxide.

11. A positive electrode comprising the positive electrode active material of any one of claims 1 to 10.

12. A lithium secondary battery comprising:
the positive electrode of claim 11;
a negative electrode;
a separator disposed between the positive electrode and the negative electrode; and
an electrolyte.
